# EUROPEAN PATENT APPLICATION

(11) **EP 3 205 586 A1**
(43) Date of publication of application: **16.08.2017**
(21) Application number: 17154991.8
(22) Date of filing: 07.02.2017
(51) Int. Cl.: B64F 1/06

(54) **RAMP OF CATAPULT**

(30) Priority: 12.02.2016 GB 201602536
(71) Applicant: Robonic Ltd Oy, 33100 Tampere (FI)
(72) Inventor: Lipponen, Pentti, 33100 Tampere (FI)
(74) Representative: Kolster Oy Ab

(57) **Abstract**

The invention relates to a ramp of a catapult and to a catapult. The catapult comprises a carriage (4) for fastening an aircraft (5). The carriage (4) is supported on a ramp (1). The ramp is formed of one or more ramp elements (1a - 1m). The ramp element comprises four frame plates, namely two parallel side plates (20a, 20b), a top plate (21) and a bottom plate (22). The frame plates are separate pieces which are connected at fastening points (25) to each other by means of mechanical fastening elements (26).

## Description

### BACKGROUND OF THE INVENTION

The invention relates to a ramp of a catapult. The ramp serves as a kind of slanted take-off runaway for a light aircraft to be launched from the catapult. The light aircraft is connected to a carriage or corresponding support structure, which is supported to support surfaces on the ramp. The catapult comprises a launching cylinder for generating a launching force in order to accelerate the aircraft under guidance of the ramp and to finally launch the aircraft from the catapult.

Further, the invention relates to a catapult for launching an unmanned aircraft.

The field of the invention is defined more specifically in preambles of independent claims.

A catapult can be used for launching to the air a light unmanned aircraft, such as a drone, a surveillance plane or a missile. The catapult typically comprises a carriage to which the aircraft is connected and which carriage is catapulted at a high speed in such a manner that the aircraft obtains a controlled starting speed and direction for takeoff. The carriage is supported to a ramp. The ramp is typically a lattice structure manufacturing of which is labour-consuming. The known ramps have also shown to contain some other problems relating to their quality.

### BRIEF DESCRIPTION OF THE INVENTION

The object of the present invention is to achieve a new and improved ramp for a catapult, and a catapult.

The ramp of the invention is characterized by features disclosed in a first independent claim.

The catapult of the invention is characterized by features disclosed in a second independent claim.

An idea of the disclosed solution is that the catapult or launcher comprises a rap which is an elongated structure connectable to a carrier or other suitable support or base. The ramp may comprise one or more elongated ramp elements. Further, the ramp comprises longitudinal first guide surfaces on an upper part of the ramp for supporting a carriage movably on the ramp. Moreover, each of the one or more ramp elements comprises two parallel side plates, which are located at a horizontal distance from each other. The ramp element also comprises at least one top plate and at least one bottom plate. The top plate and the bottom plate are located at a vertical distance from each other. The side plates, the top plate and the bottom plate are frame plates, which are separate pieces, which are manufactured separately and are connected to each other during assembly. The frame plates are fastened to each other at fastening points by means of mechanical fastening elements.

An advantage of the disclosed solution is that, since mechanical fastening means are used at the fastening points, no weld joints are needed. When the components of the ramp element are assembled by using relatively simple mechanical fastening means, the ramp is easy and fast to manufacture. Tools required for mechanical fastening are simple and easy to use for anyone, unlike welding apparatuses. Thereby, assembly personnel do not need to be qualified welders. Moreover, in the production of the disclosed ramp elements assembly means may be simple and no special jigs or other assembly assisting means are necessarily needed. Further, since no thermal expansion caused by the welding occurs, the ramp may have improved dimensional accuracy and straightness. The two side plates, the top plate and the bottom plate form a closed box-like structure, which is beneficial regarding strength properties, especially torsional strength.

According to an embodiment, the ramp comprises only one single ramp element. One ramp element may be sufficient for a small catapult.

According to an embodiment, the ramp may comprise two or more elongated ramp elements, which are connected to each other by means of hinges so that the ramp may be folded for transport and storage. Thus, the ramp is a foldable structure and is provided with a launching position and a transport or storage position. The number of the ramp elements may be two to five.

According to an embodiment, the fastening points between the frame plates of the ramp element are without weld joints.

According to an embodiment, the ramp is assembled of components which are provided with premanufactured fastening points so that during the assembly it is simple to place the mechanical fastening elements to the preformed fastening points. Then, the assembly personnel need not to make additional measures or amendments for the components to be connected.

According to an embodiment, the fastening points of the frame plates are provided with fastening openings extending though structures connected at the fastening points. The fastening openings may be drilled or formed already during manufacture of the frame plates, whereby no drilling is executed at the assembly step. During the assembly the fastening openings are provided with the mechanical fastening elements, which are tightened for generating fastening forces. The mechanical fastening elements may pass through the connected two frame plates. The mechanical fastening element is relatively easy to place through the accurately predrilled fastening holes and may thereafter be tightened by a simple handheld tool, for example.

According to an embodiment, the frame plates of the ramp element are connected to each other by using rivets as the mechanical fastening elements. Thus, the ramp element is a riveted structure. The rivets may be pop rivets, for example. The rivets are easy and fast to use.

According to an embodiment, the frame plates of the ramp element are connected to each other by using fastening screws as the mechanical fastening elements. In this solution the ramp element is a screw-fastened piece.

According to an embodiment, the fastening points between the frame elements of the ramp elements are provided with adhesive joints in addition to mechanical fastening elements. Thus, one or more adhesive material may be utilized for additionally securing the mechanical fastening. The combination of two fastening systems improves durability and strength of the structure. Use of the adhesive agent does not complicate nor slow down the assembly.

According to an embodiment, the fastening points between the frame elements of the ramp elements are provided with angle pieces, which are separate pieces relative to the frame plates. Thus, the fastening point comprises two frame plates, one or two angle pieces and several mechanical fastening elements. The angle pieces comprise two fastening surfaces, which are mounted against surfaces of the frame plates to be connected. The angle pieces may be elongated bars, or alternatively they may be shorter pieces.

According to an embodiment, the fastening points between the frame elements comprise angle pieces, which are longitudinal bars made by extrusion. By means of extrusion techniques pieces having uniform quality may be produced. The extruded pieces may also be inexpensive.

According to an embodiment, one of the two frame plates connected to each other at the fastening point comprises a transverse edge portion fastened directly against another frame plate by means of mechanical fastening elements, such as rivets or screws. Thus, the fastening point may be without any intermediate connecting piece, such as an angle piece. The transverse edge portion may be a bent edge or it may be formed by means of any other way.

According to an embodiment, each of the one or more ramp elements comprises two parallel and longitudinal guide rails on their upper surface sides. The guide rails may comprise longitudinal guide flanges and longitudinal fastening flanges arranged in an angular position relative to each other. The fastening flanges of the guide rails are fastened by means of mechanical fastening means to at least one frame plate of the ramp element. The guide flanges may serve as guide surfaces for a carriage supporting an aircraft to be launched. The carriage may comprise roller or slide elements, which are in contact with the guide flanges.

According to an embodiment, each of the one or more ramp elements comprises two parallel and longitudinal guide rails. The guide rails are dimensioned to be part of a load bearing structure of the ramp element. When all the longitudinal components of the ramp elements are load bearing components, weight of the structure may be decreased.

According to an embodiment, the ramp element comprises two side plates, which extend above the top plate and form two protruding side plate portions on the upper side of the ramp element. Both protruding side plate portions are provided with longitudinal guide rails. The guide rails are fastened against opposing side surfaces of the protruding side plate portions.

According to an embodiment, one or more frame plates of at least the ramp element comprise a plurality of openings, whereby the frame plates may have a lattice structure configuration. However, the lattice structure is not formed in a conventional manner by fastening bars to each other, but is instead formed by removing material from a plate-like piece or generating the lattice structure in one go, so that the lattice structure is an integrated element.

According to an embodiment, all or one or more frame plates of the ramp element are made of aluminium or aluminium alloy. Aluminium is light weight and corrosion resistant material, and it also has good strength properties. Aluminium structures are relatively difficult to assemble by using welding techniques. However, in the disclosed solution mechanical fastening means are used, whereby assembly of the aluminium structure is not a problem.

According to an embodiment, the angle pieces arranged at corners between the frame plates are made of aluminium or aluminium alloy. The angle pieces may be manufactured by extrusion techniques.

According to an embodiment, the guide rails are made of steel whereby they have sufficient wear resistance.

According to an embodiment, at least the frame plates of the ramp element are made of composite material comprising reinforcing fibres and at least one polymeric binding material. The fibre reinforced polymer structure is light in weight and has excellent strength properties.

According to an embodiment, the frame plate of the ramp element is made of composite material comprising reinforcing fibres and at least one polymeric binding material. The frame plate is cut off from a composite blank plate by means of abrasive water jet. Further, possible openings of the frame plate are also made by abrasive water jet.

According to an embodiment, the frame plate of the ramp element is made of composite material comprising reinforcing fibres and at least one polymeric binding material. The frame plate is moulded of fibre reinforced plastic material.

According to an embodiment, the ramp may comprise a front ramp element, a rear ramp element and a middle ramp element between the front and the rear ramp elements. The middle ramp element may comprise longitudinal second guide surfaces. Then, both side plates of the middle ramp element comprise longitudinal central openings, which comprise longitudinal edges. And further, the second guide surfaces are formed of four parallel second guide rails, which are fastened to longitudinal edges of the central openings of the side plates by means of mechanical fastening means. The second guide rails may be configured provide axial support and guide for a second carriage, which is connected to a launching cylinder of the catapult.

According to an embodiment, cross sections of a front and rear ramp elements decrease towards their free ends. An upper surface of the ramp element is even and a bottom surface comprises at least one slanted portion.

According to an embodiment, the side plates and top plates of the ramp element extend as one uniform pieces from end to end.

According to an embodiment, the bottom plate of a middle ramp element extends as one uniform piece from end to end.

According to an embodiment, a catapult for launching an unmanned aircraft comprises at least the following features: an elongated ramp; a first carriage supported to the ramp and being movable in the longitudinal direction of the ramp from a launch position to a release position and back, and which first carriage comprises coupling members for supporting the aircraft; a second carriage that is also supported to the ramp and is movable in the longitudinal direction of the ramp; at least one pressure-medium-operated launching cylinder configured to move the second carriage for generating launching movement in the launching direction; at least one pulley mechanism that comprises at least one pulley and is arranged in connection with the second carriage; at least one pulling element that is engaged with the first carriage and the ramp and is further configured to run via at least one launch-side pulley mechanism and to transmit the motion of the second carriage to the first carriage for moving the first carriage from the launch position to the release position; locking means for keeping the first carriage at the launching position and for releasing it at a launching moment. Furthermore, the ramp may be in accordance with any one of the preceding embodiments and features disclosed above.

The above disclosed embodiments and features may be combined for generating suitable combinations and solutions.

### BRIEF DESCRIPTION OF THE FIGURES

The disclosed solution will be described in more detail in the accompanying drawings, in which
Figure 1 is a schematic side view of a catapult arranged on a movable carrier,
Figure 2 schematically shows the principle of a launching apparatus,
Figure 3 is a schematic view of a ramp element seen in a longitudinal direction of a ramp,
Figure 4 is a schematic view of an alternative ramp element seen in a longitudinal direction of a ramp,
Figure 5 is a schematic side view of a middle ramp element of a ramp,
Figure 6 is a schematic top view of a middle ramp element of a ramp, and
Figure 7 is a schematic side view of a feasible pivoting and coupling arrangement between two ramp elements.

For the sake of clarity, the figures show the invention in a simplified manner. In the figures, similar parts are denoted by the same reference numerals.

### DETAILED DESCRIPTION OF SOME EMBODIMENTS

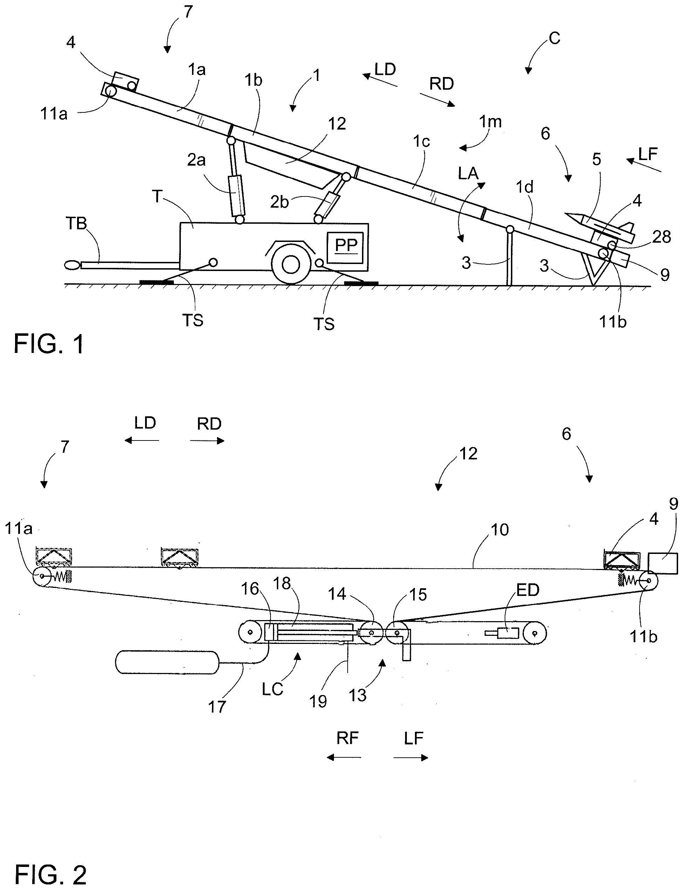

Figure 1 shows a catapult C in a launching position. The catapult C comprises an elongated body or ramp 1, which may be composed of several ramp portions or elements 1 a to 1 d, which may be folded laterally to a transport and storage position. The ramp 1 may be lifted and lowered for instance with one or more hydraulic cylinders 2a and 2b so as to achieve the desired launching angle LA. In addition, the ramp 1 may be supported with a suitable number of supports 3 to the ground or other support surface. The ramp 1 and assisting means and systems may be connected to a mobile carrier T, such as a trailer, which may be equipped with a tow bar TB, stabilizers TS and one or more power packs PP and devices for generating needed electric, pneumatic and hydraulic energy. The catapult C may further comprise a carriage 4 having fastening members for fastening an aircraft 5. The carriage 4 may be supported on guiding surfaces or corresponding support surfaces provided on the ramp 1 by means of rollers, slide blocks or corresponding members. In the portion of a first end of the ramp 1 is provided a launching position 6 and in the portion of a second end is provided a releasing position 7. The carriage 4 is movable with high acceleration from the launching position 6 to the releasing position 7, where the aircraft 5 is released from the carriage and takes off. The aircraft 5 may be released from the carriage 4 at the second end of the ramp 1 or well before the carriage 4 reaches the second end of the body 1. After the launch, the carriage 4 is returned to the launching position 6 for a new launch. Launching force LF required in the launch may be generated by means of a launching device 12, which comprises one or more launching cylinders and means for transmitting the generated launch force to the carriage 4. Figure 1 does not show the launching device in its entirety for the sake of clarity.

Furthermore, the launching position 6 is provided with a locking device 9, which is able to hold the carriage 4 until the launching moment. In the locking position, the locking device 9 is able to receive the launching force LF directed to the carriage 4 and it may release the carriage 4 after the launch, whereby the carriage 4 accelerates at a high speed towards the releasing position 7. Accordingly, the catapult C is used to provide the aircraft 5 with an as high takeoff speed as possible in a short distance. In principle, the aircraft 5 may be any relatively light unmanned aircraft, which may be provided with a propulsion device, such as an airscrew, jet engine or rocket engine. Furthermore, the aircraft 5 may comprise ailerons or other control members for controlling it with remote control or automatically by means of a control system in the aircraft 5. It is further mentioned that the catapult C may alternatively be installed fixedly at a launching site or it may be connected to a movable base, such as a ship.

In Figure 1 the ramp 1 comprises four ramp elements 1a - 1 d, but a typical ramp 1 comprises three ramp elements, namely a front ramp element 1 a, a rear ramp element 1 d and one middle ramp element 1 m between them. However, small-sized launchers may comprise only one ramp element and large-sized launchers may comprise four or even five ramp elements.

Figure 2 shows in a strongly simplified manner a launching device 12 with which the required launching force LF can be generated. For the sake of clarity, the aircraft 5 and the ramp 1 are not shown at all. In the situation of Figure 2, the carriage 4 is in the launching position 6, where it is kept immobile by means of a locking device 9. One or more pulling members 10, e.g. a wire arranged to pass around idler wheels 11 a and 11 b, are connected to the carriage 4. The pulling member 10 may also be some other pull-resistant flexible power transmission member, such as a cord, band or chain. The carriage 4 is movable from the launching position 6 to the releasing position 7 and vice versa by pulling the pulling member 10 either in the launching direction LD or in the returning direction RD. The launching force LF required by the launch can be generated in the pulling member 10 by means of a launching cylinder LC. The launching cylinder LC is a pressure medium operated cylinder, which may be arranged to generate the launching force LF in the pulling member 10 by means of a tackle mechanism 13. In this case, the launching cylinder LC may be arranged to move tackle pulleys 14 and 15 comprised by the tackle mechanism 13. For the launch, the carriage 4 is locked by means of the locking device 9 to the launching position 6, and the desired pulling force is generated in the pulling member 10 by a stroke of the launching cylinder LC. The launching cylinder LC is provided with a pneumatic first pressure space 16 connected to a pneumatic circuit 17 in order to generate the launching force LF. Further, the launching cylinder LC comprises a hydraulic second pressure space 18 for generating returning force RF, whereby no separate returning device is needed. Figure 2 further shows an end damper ED or stopping damper, which is able to stop the launching mechanism when the carriage 4 has reached the releasing position 7. The end damper ED may alternatively be integrated to be part of the launching cylinder LC whereby no separate actuator is needed.

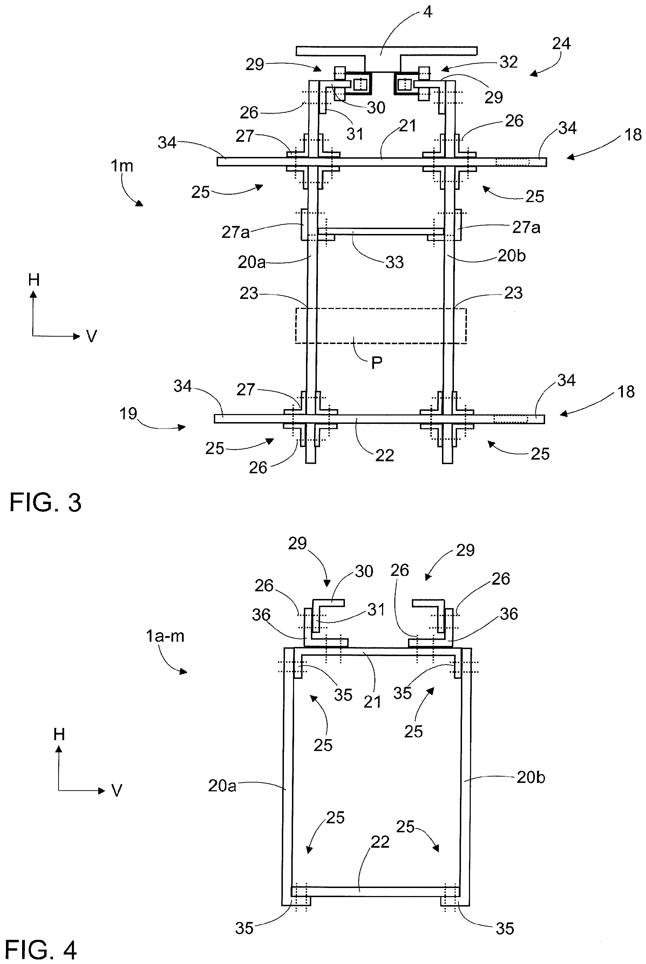

Figure 3 shows in a more detailed manner a structure of a feasible ramp element 1 m. The ramp element 1 m may be provided with hinge means 18 and coupling means 19 at its both end portions for connecting other ramp elements. The ramp element 1 m is formed of at least four frame plates, which may be two parallel side plates 20a, 20b, a top plate 21 and a bottom plate 22. The side plates 20a and 20b are located at a horizontal H distance from each other, and the top plate 21 and the bottom plate 22 are located at a vertical V distance from each other. Thus, the ramp element 1 m may have a box-type cross-section, which is advantageous regarding strength. The side plates 20a, 20b may also be provided with connecting openings 23 for connecting a launching cylinder and launching means to the middle ramp element 1 m. A connecting pin P or corresponding element may be arranged through the connecting openings 23 in a transverse direction. On an upper surface side of the middle ramp element 1 m there are guide surfaces 24 for providing support for an overhead carriage 4.

The side plates 20a, 20b may be fastened at fastening points 25 to the top plate 21 and bottom plate 22 by means of mechanical fastening elements 26, which are, for clarity reasons, shown as broken lines in Figures 3 and 4. At corners between the frame plates may be angle pieces 27, which may be elongated bars, or alternatively, several separate shorter angle pieces are utilized. As can be noted, the side plates 20a, 20b may extend above the top plate 21 and thus comprise upward protruding portions 28, which are furnished with separate longitudinal guide rails 29 serving as the guide surfaces 24 for the carriage 4. The guide rails 29 may also be angle pieces comprising guide flanges 30 and fastening flanges 31. The fastening flanges 31 may be fastened to the distal end portions of the side plates 20a, 20b by means of mechanical fastening elements 26, such as rivets or screws. Against the guide flanges 30 may be supported roller means 32 of the carriage 4. The guide rails 29 may be of material having good strength, so that they may be part of the load bearing structure of the ramp element 1 m. The guide rails 29 should also have relatively good resistance against wear. Further, the structure may comprise one or more horizontal intermediate plates 33 arranged between the side plates 20a, 20b. The intermediate plates 33 may also be fastened by means of mechanical fastening elements 26 and angle pieces 27a. In the disclosed solution the angle piece 27a is arranged from an outer surface side through a longitudinal aperture to an inner surface side of the side plate so that the intruding flange forms a bracket inside the structure and provides support for the intermediate plate 33. The intermediate plate 33 may prevent buckling of the side plates, or alternatively, it may have any other purpose. The same fastening principle may also be utilized for fastening the top and bottom plates 21,22.

The top plate 21 and the bottom plate 22 may extend in a side ward direction a distance from the outer surfaces of the side plates 20a, 20b at least at end portions of the ramp element. Thus, the extending portions 34 may be provided with hinge and coupling means 18, 19.

Furthermore, horizontal direction H and vertical direction V are also shown in Figures 3 to 5.

Figure 4 discloses a principle of an alternative ramp element, wherein no angle pieces are used for connecting the frame plates together. Instead, the frame plates may comprise transverse edge portions 35 against which surfaces of the connected frame plates are fastened by means of mechanical fastening elements 26. However, the structure may alternatively utilize a combination of one or more angle pieces 27 and one or more transverse edge portions 35.

Further, the solution of Figure 4 differs from the solution of Figure 3 in that the guide rails 29 are fastened to the top plate 21 by means of separate angle pieces 36 and mechanical fastening elements 26.

The basic structures and fastening principles disclosed in Figures 3 and 4 may be utilized in addition to middle ramp elements 1 m also in front and rear ramp elements 1a, 1d.

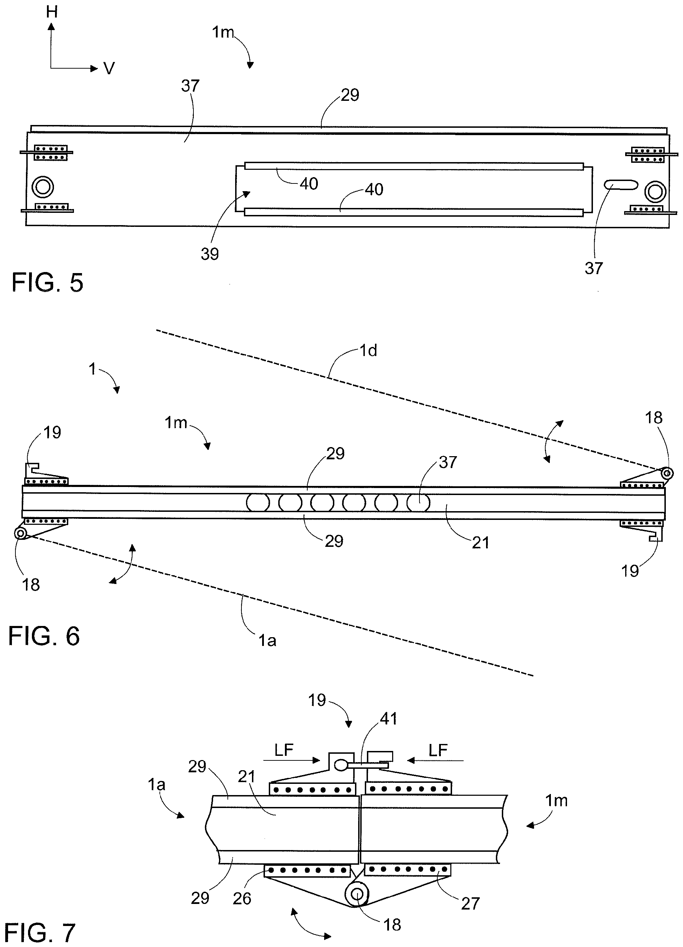

Figure 5 discloses a middle ramp element 1 m of a ramp. Both side plates of the ramp element 1 m comprise longitudinal central openings 39 which comprise longitudinal edges. The longitudinal edges are provided with second guide rails 40 serving as support and guide means for a second carriage of a catapult.

Figure 6 discloses a middle ramp element 1 m of a ramp seen from above. A top plate 21 may also comprise openings 37 thereby making the structure lighter. Further, as can be noted, a front ramp element 1a and rear ramp element 1 d may be connected to the middle ramp element 1 m by means of hinges 18. Thereby, the front and rear ramp elements 1a, 1d may be folded laterally against side surfaces of the middle ramp element 1 m. In this transport or storage position, the ramp 1 is significantly shorter and thereby has a positive influence on mobility of a catapult.

Figure 7 discloses a feasible pivoting and coupling arrangement between two ramp elements 1 a and 1 m. Connecting means 19 may comprise a force element 41 for generating locking forces LC for keeping the ramp elements 1 a and 1 m connected. The connecting means 19 may comprise suitable quick coupling means, for example.

The drawings and the related description are only intended to illustrate the idea of the invention. The details of the invention may vary within the scope of the claims.

## Claims

1. A ramp of a catapult comprising:
at least one elongated ramp element;
longitudinal first guide surfaces on an upper part of the ramp for supporting a carriage movably on the ramp;
and wherein the at least one ramp element comprises two parallel side plates, which are located at a horizontal distance from each other, and further, at least one top plate and at least one bottom plate, which top plate and bottom plate are located at a vertical distance from each other;
and further, the frame plates are separate pieces which are connected at fastening points to each other by means of mechanical fastening elements.

2. The ramp as claimed in claim 1, wherein
the fastening points are provided with fastening openings extending though structures connected at the fastening points;
and the fastening openings are provided with the mechanical fastening elements, which are tightened for generating fastening forces.

3. The ramp as claimed in claim 1 or 2, wherein
the mechanical fastening elements are rivets, whereby the ramp element is a riveted structure.

4. The ramp as claimed in claim 1 or 2, wherein
the mechanical fastening elements are fastening screws.

5. The ramp as claimed in any one of the preceding claims 1 to 4, wherein
the fastening points are provided with adhesive joints in addition to mechanical fastening elements.

6. The ramp as claimed in any one of the preceding claims 1 to 5, wherein
the fastening points are provided with angle pieces, which are separate pieces relative to the frame plates;
and the angle pieces comprise two fastening surfaces, which are mounted against surfaces of the frame plates.

7. The ramp as claimed in claim 6, wherein
the angle pieces are longitudinal bars made by extrusion.

8. The ramp as claimed in any one of the preceding claims 1 to 5, wherein
one of the two frame plates connected to each other at the fastening point comprises at least one transverse edge portion fastened directly against another frame plate without intermediate connecting pieces.

9. The ramp as claimed in any one of the preceding claims 1 to 8, wherein
the ramp element comprises two parallel and longitudinal guide rails on an upper surface side of the ramp element;
the guide rails comprise longitudinal guide flanges and longitudinal fastening flanges arranged in an angular position relative to each other;
and the fastening flanges of the guide rails are fastened by means of mechanical fastening means to at least one frame plate of the ramp element.

10. The ramp as claimed in claim 9, wherein
the two side plates extend above the top plate and form two protruding side plate portions on the upper side of the ramp element;
and both protruding side plate portions are provided with the longitudinal guide rails, which guide rails are fastened against opposing side surfaces of the protruding side plate portions.

11. The ramp as claimed in any one of the preceding claims 1 to 10, wherein
the frame plates comprise a plurality of openings whereby the frame plates have a lattice structure configuration.

12. The ramp as claimed in any one of the preceding claims 1 to 11, wherein
at least the frame plates of the ramp element are made of aluminium or aluminium alloy.

13. The ramp as claimed in any one of the preceding claims 1 to 12, wherein
the ramp comprises a front ramp element, a rear ramp element and a middle ramp element between the front and the rear ramp elements;
the middle ramp element comprises longitudinal second guide surfaces;
both side plates of the middle ramp element comprises longitudinal central openings, which comprise longitudinal edges;
the second guide surfaces are formed of four parallel second guide rails, which are fastened to longitudinal edges of the central openings of the side plates by means of mechanical fastening means.

14. A catapult for launching an unmanned aircraft, which catapult comprises at least:
an elongated ramp;
a first carriage supported to the ramp and being movable in the longitudinal direction of the ramp from a launch position to a release position and back, and which first carriage comprises coupling members for supporting the aircraft;
a second carriage that is also supported to the ramp and is movable in the longitudinal direction of the ramp;
at least one pressure-medium-operated launching cylinder configured to move the second carriage for generating launching movement in launching direction;
at least one pulley mechanism that comprises at least one pulley and is arranged in connection with the second carriage;
at least one pulling element that is engaged with the first carriage and the ramp and is further configured to run via at least one launch-side pulley mechanism and to transmit the motion of the second carriage to the first carriage for moving the first carriage from the launch position to the release position;
locking means for keeping the first carriage at the launching position and for releasing it at a launching moment;
and wherein the ramp is in accordance with any one of the preceding claims 1 to 13.

15. The catapult as claimed in claim 14, wherein
the ramp comprises at least two elongated ramp elements connected to each other by means of hinges whereby the ramp is a foldable structure.
